# EUROPÄISCHE PATENTANMELDUNG

(11) **EP 4 009 263 A1**
(43) Veröffentlichungstag der Anmeldung: **08.06.2022**
(21) Anmeldenummer: 20000440.6
(22) Anmeldetag: 04.12.2020
(51) Int. Cl.: G06Q 30/02, G06Q 40/06

(54) **COMPUTERGESTÜTZTE AUSWERTUNG VON MUSTERN IN UNTERSCHIEDLICHEN ZEITREIHEN**

(71) Anmelder: Mayer, Rudolf, 9210 Pörtschach (AT)
(72) Erfinder: Mayer, Rudolf, 9210 Pörtschach (AT)

(57) **Zusammenfassung**

Die Erfindung betrifft die computergestützte Auswertung von Mustern in unterschiedlichen Zeitreihen, wobei bei einer vorherbestimmten Korrelationen von zeitlichem Auftreten und Zeitdauer des Auftreten von Mustern in unterschiedlichen Zeitreihen ein Signal emittiert wird.

In einer bevorzugten Ausführungsform der Erfindung enthält das emittierte Signal eine Information, dass ein auf einer Kreditblase beruhender Wirtschaftsboom sich in der Nähe seines Höhepunktes befinden könnte, und zwar dann, wenn über einen Zeitraum von ca. sechs Monaten bis ca. einem Jahr in den Medien konzentriert Berichte aufgetreten, die auf einen auf einer Kreditblase beruhenden Wirtschaftsboom hindeuten könnten, und wenn in diesem Zeitraum trotz steigender Aktienindices die Anzahl der Aktien, die einen neuen Jahreshöchstkurs erreichen, abnimmt bzw. die Anzahl der Aktien, die einen neuen Jahrestiefstkurs erreichen, zunimmt.

## Beschreibung

Die Erfindung betrifft das Gebiet der Auswertung von Mustern in Zeitreihen.

Die Offenlegungsschrift DE102010034053A1 beschreibt ein Verfahren zur musterbasierten Prognose von Zeitreihen, das das historische Verhalten einer Zeitreihe nutzt, um die künftige Entwicklung zu prognostizieren.

EP2821953A1 beschreibt Verfahren und Systeme zur Vorhersage von ökonomischen Bewegungen.

Die Erfindung betrifft die computergestützte Auswertung von Mustern in unterschiedlichen Zeitreihen, wobei bei einer vorherbestimmten Korrelation von zeitlichem Auftreten und Zeitdauer des Auftreten von Mustern in unterschiedlichen Zeitreihen ein Signal emittiert wird.

In einer bevorzugten Ausführungsform der Erfindung enthält das emittierte Signal eine Information, dass ein auf einer Kreditblase beruhender Wirtschaftsboom sich in der Nähe seines Höhepunktes befinden könnte, und zwar dann, wenn über einen Zeitraum von ca. sechs Monaten bis ca. einem Jahr in den Medien konzentriert Berichte auftreten, die auf einen auf einer Kreditblase beruhenden Wirtschaftsboom hindeuten könnten, und wenn in diesem Zeitraum trotz steigender Aktienindices die Anzahl der Aktien, die einen neuen Jahreshöchstkurs erreichen, abnimmt bzw. die Anzahl der Aktien, die einen neuen Jahrestiefstkurs erreichen, zunimmt.

Es wird ausdrücklich darauf hingewiesen, dass die bevorzugte Ausführungsform der Erfindung auf Annahmen und daraus abgeleiteten Schlussfolgerungen beruht - und nicht auf gesicherten Erkenntnissen. Denn es ist nicht möglich, den Zeitpunkt zu ermitteln, wann ein auf einer Kreditblase beruhender Wirtschaftsboom sich in der Nähe seines Höhepunktes befindet. Dazu wäre eine Formel notwendig, mit der man berechnen könnte, wie sich Marktteilnehmer, d. h. Menschen zukünftig verhalten werden. Eine derartige Formel gibt es natürlich nicht.

Da die gemachten Annahmen und die daraus abgeleiteten Schlussfolgerungen das zukünftige Verhalten von Menschen betreffen, können sie keine Gültigkeit beanspruchen, denn das zukünftige Verhalten von Menschen lässt sich nicht zutreffend berechnen. Es wird somit kein Anspruch erhoben, dass die gemachten Annahmen und die daraus abgeleiteten Schlussfolgerungen zutreffend sind.

Man könnte sich somit fragen, warum die bevorzugte Ausführungsform der Erfindung dann überhaupt angemeldet wurde? Vielleicht deshalb, weil auch eine bevorzugte Ausführungsform der Erfindung, deren Richtigkeit streng logisch nicht bewiesen werden kann (was nach Auffassung des Anmelders für alle Aussagen zutrifft, die wirtschaftliche und gesellschaftliche Ereignisse betreffen, d. h. Ereignisse, die abhängig vom Verhalten von Menschen sind), möglicherweise einen Betrag leisten könne, einem gesteckten Ziel etwas näher zu kommen.

Die bevorzugte Ausführungsform der Erfindung beruht im Wesentlichen auf folgenden Annahmen und den daraus abgeleiteten Schlussfolgerungen:
Wenn ein auf einer Kreditblase beruhender Wirtschaftsboom über einen längeren Zeitraum andauert, kann er Auswirkungen hervorbringen, die schrittweise zu einer Verschlechterung der Wirtschaftslage führen können. Dies könnten z. B. Fehlinvestitionen aufgrund des allgemeinen Überoptimismus über die zukünftige Wirtschaftsentwicklung bzw. übertriebene Euphorie bezüglich der Entwicklung bestimmter Sektoren (z. B. Telecom und Internet im Jahre 2000), hohe Lohnerhöhung trotz im Vergleich zu einer Rezession niedrigeren Effizienz der Arbeitnehmer, Verteuerung von Investitionen aufgrund von Arbeitskräftemangel und langer Lieferzeiten für Zulieferkomponenten, steigende Zinsen und ungleich gestiegene Preise sein. Diese negativen Auswirkungen dürften jedoch nicht alle Firmen gleichzeitig und gleich stark treffen, einige könnten früher und stärker davon betroffen sein als die große Mehrheit der Firmen. Somit könnte es in der Nähe des Höhepunkts eines derartigen Wirtschaftsbooms Firmen geben, deren Gewinne bzw. Gewinnerwartungen bereits zurückgegangen sind. Wenn während eines auf einer Kreditblase beruhenden Wirtschaftsbooms erste Berichte aufgetreten, dass in einzelnen Branchen die Gewinne bzw. die Gewinnerwartungen von Firmen bereits zurückgegangen sind, dann könnte sich ein derartiger Wirtschaftsboom in der Nähe seines Höhepunktes befinden. Das deshalb, weil jene Firmen, deren Gewinne bzw. Gewinnerwartungen bereits zurückgegangen sind, weniger Aufträge an ihre Zulieferfirmen erteilen könnten und die betroffenen Zulieferfirmen wiederum weniger Aufträge an ihre Zulieferfirmen und so fort, und weil diese Verringerung der Aufträge insbesondere die Probleme von jenen Firmen vergrößern könnte, die ohnehin schon unter den negativen Auswirkungen eines auf einer Kreditblase beruhenden Wirtschaftsboom leiden. Folglich könnte eine Verschlechterung der Gewinnsituation in einigen Branchen sich allmählich zu einer allgemeinen Verschlechterung der Wirtschaftslage bis hin zu einer schweren Rezession ausbreiten. Natürlich gibt es dafür keine Gewissheit, denn die zukünftige Wirtschaftsentwicklung wird nicht nur von den negativen Auswirkungen eines auf einer Kreditblase beruhenden Wirtschaftsbooms, sondern auch noch von unbekannt vielen anderen Faktoren beeinflusst.

Ein Anzeichen dafür, dass in einzelnen Branchen die Gewinne bzw. die Gewinnerwartungen von Firmen bereits zurückgegangen sein könnten, könnte sein, wenn trotz Wirtschaftsboom und steigender Aktienindices die Anzahl der Aktien, die einen neuen Jahreshöchstkurs erreichen, abnimmt bzw. die Anzahl der Aktien, die einen neuen Jahrestiefstkurs erreichen, zunimmt. Denn zwischen der Entwicklung von Aktienkursen und der Gewinnerwartung von Firmen besteht oft ein Zusammenhang. Dafür gibt es natürlich auch keine Gewissheit, denn die Entwicklung der neuen Jahreshöchst- bzw. Jahrestiefstkurse von Aktien kann nicht nur von einem Rückgang der Gewinne bzw. Gewinnerwartungen von Firmen, sondern auch noch von unzählig vielen anderen Faktoren beeinflusst werden. Es ist somit unmöglich zu beweisen, dass ein Rückgang der Gewinne bzw. Gewinnerwartungen zu einer Abnahme der neuen Jahreshöchstkurse bzw. zu einer Zunahme der neuen Jahrestiefstkurse von Aktien führt. Es trifft im Übrigen für alle wirtschaftlichen und gesellschaftlichen Ereignisse zu, dass nicht bewiesen werden kann, welcher Einflussfaktor sie bewirkt hat. Da wirtschaftliche und gesellschaftliche Ereignisse das Resultat des Zusammenwirkens von unzählig vielen Einflussfaktoren sind, kann man lediglich das aufgetretene Resultat feststellen, nicht jedoch die Größe und Richtung der Wirkung der einzelnen Einflussfaktoren auf das Resultat. Daher ist es unmöglich zu beweisen, dass ein bestimmter Einzelfaktor ein aufgetretenes Resultat bewirkt hat.

Wichtig für die bevorzugte Ausführungsform der Erfindung ist die Ermittlung von Anzeichen, die auf einen auf einer Kreditblase beruhenden Wirtschaftsboom hindeuten könnten. Dies könnte dadurch erfolgen, dass festgestellt wird, dass in den Medien konzentriert Berichte auftreten, wie z. B., dass
- ein starker Arbeitskräftemangel herrscht und sogar Hilfskräfte und gering qualifizierte Arbeitskräfte schwer zu finden sind,
- Firmen für neue Mitarbeiter Kopfgeld bezahlen und ihrer Belegschaft freiwillige Lohnerhöhungen gewähren,
- Mitarbeiter sich gegenüber Kunden unverschämt verhalten und sogar Kundenbeschimpfungen vorkommen,
- die Anzahl der Millionäre steigt und sogar einfache Mitarbeiter von Firmen zu Millionären werden,
- viele Firmen an der Kapazitätsgrenze arbeiten und die Lieferzeiten lang sind,
- gewisse Firmen keine neuen Aufträge mehr annehmen,
- Kunden für Termine bei Handwerkern betteln müssen,
- die Preise, insbesondere von Rohstoffen und Investitionsgütern steigen,
- die kurz- und langfristigen Zinsen steigen,
- der Anteil der Investitionen am BIP ansteigt,
- die Aktien von Firmen, die Investitionsgüter erzeugen, relativ zu nicht-zyklischen Aktien stark steigen,
- Infrastruktureinrichtungen wie Flughäfen und Restaurants überfüllt sind,
- sich an gewissen Märkten Blasen gebildet haben (z. B. Immobilienblase, Dotcom-Blase, Private-Equity-Blase, Junk-Bond-Blase usw.),
- sich Investoren leichtsinnig verhalten, ersichtlich an steigenden Investitionen in Venture Capital, Private Equity, Start-ups, Junk Bonds und verstärkter Werbung für Investitionen mit unrealistisch hohen Renditen,
- unter Investoren die Meinung weit verbreitet sei, gewisse Investitionsformen bringen eine anhaltende Wertsteigerung ohne Verlustgefahr (z. B. US-Wohnimmobilien in den Jahren vor 2008).

Natürlich sind die angeführten Anzeichen nicht vollständig, denn auch noch unbekannt viele andere Anzeichen können auf einen auf einer Kreditblase beruhenden Wirtschaftsboom hindeuten. Des Weiteren ist nicht nur die Konzentration von Berichten von Bedeutung, sondern auch deren Inhalt, d. h. mit welcher Stärke er auf einen auf einer Kreditblase beruhenden Wirtschaftsboom hindeutet. Die bleibt jedoch bei der Abschätzung, ob ein auf einer Kreditblase beruhenden Wirtschaftsbooms vorliegt, unberücksichtigt, da sie nur subjektiv ermittelt werden kann. Außerdem kann lediglich basierend auf langer Erfahrung abgeschätzt werden, wie stark die Konzentration des Auftretens dieser Berichte und die Stärke ihres Inhalts, mit der er auf einen Wirtschaftsboom hindeutet, sein muss, um als Anzeichen für das Vorhandensein eines auf einer Kreditblase beruhenden Wirtschaftsbooms gewertet werden zu können. Ein Patentrezept dafür gibt es nicht.

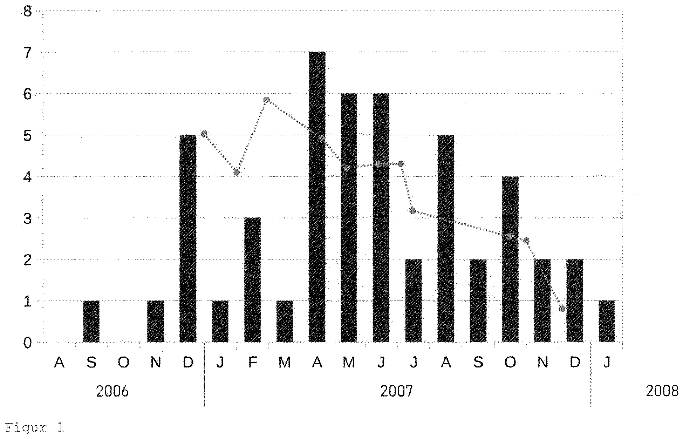

Figur 1 zeigt die Entwicklung der Konzentration von Berichten (Histogramm), die auf einen auf einer Kreditblase beruhenden Wirtschaftsboom hindeuten könnten und die Entwicklung der neuen Jahreshöchstkursen (grüne punktierte Linie) von ausgewählten Aktien von Mitte 2006 bis Anfang 2008.

Die bevorzugte Ausführungsform der Erfindung wird mithilfe von Figur 1 näher erläutert:
Ab Herbst 2006 gab es vermehrt Berichte in den Medien, dass viele Firmen an der Kapazitätsgrenze arbeiteten, die Kapazitätsauslastung der Firmen historisch gesehen hoch war, starker Arbeitskräftemangel herrschte und einige Firmen sogar Kopfgeld für neue Mitarbeiter zahlten, die kurz- und langfristigen Zinsen und die Preise, insbesondere die Rohstoffpreise gestiegen sind, der Anteil der Investitionen am BIP anstiegen ist, die Aktien von Firmen, die Investitionsgüter erzeugen, relativ zu nichtzyklischen Aktien stark angestiegen sind, sich am amerikanischen, spanischen und irischen Immobilienmarkt Blasen gebildet haben, sich am Private-Equity-Markt eine Blase gebildet hat. Des Weiteren gab es in den Medien vermehrt Werbung für Investitionen mit unrealistisch hohen Renditen. Viele Aktienindices erreichten Mitte 2007 bzw. im Oktober 2007 neue Höchststände. Allerdings war zu diesen Zeitpunkten die Anzahl der neuen Jahreshöchstkurs einer ausgewählten Anzahl von Aktien wesentlich niedriger als Ende 2006 bzw. Anfang 2007. Dies könnte ein Anzeichen dafür gewesen sein, dass bereits Mitte 2007 bzw. im Oktober 2007 in einzelnen Branchen die Gewinne bzw. die Gewinnerwartungen von Firmen zurückgegangen sein könnten. All diese Daten könnten als Anzeichen dafür gewertet werden, dass der Wirtschaftsboom bereits Mitte 2007 bzw. im Oktober 2007 sich in der Nähe seines Höhepunktes befunden haben könnte. Natürlich gibt es dafür keine Gewissheit, denn die tatsächliche Wirtschaftsentwicklung wird nicht nur von den negativen Auswirkungen eines auf einer Kreditblase beruhenden Wirtschaftsbooms, sondern auch noch von unbekannt vielen anderen Faktoren bestimmt. Somit ist es unschwer zu erkennen, dass die bevorzugte Ausführungsform der Erfindung auf Annahmen (und daraus abgeleiteten Schlussfolgerungen) - und nicht auf Gewissheiten - beruht. Es kann kein Anspruch erhoben werden, dass die gemachten Annahmen und die daraus abgeleiteten Schlussfolgerungen zutreffen, da sie das zukünftige Verhalten von Menschen betreffen, das nicht zutreffend berechnet werden kann.

### Umkehrschluss bezüglich Rezession:

Aus der bevorzugten Ausführungsform der Erfindung und den angeführten Annahmen und Schlussfolgerungen auf denen sie beruht, könnte im Umkehrschluss abgeleitet werden, dass, wenn, sich während einer bereits länger andauernden Rezession die Anzahl der Aktien, die einen neuen Jahrestiefstkurs erreichen über einen gewissen Zeitraum trotz fallender Aktienindices abnimmt bzw. die Anzahl der Aktien, die einen neuen Jahreshöchstkurs erreichen, zunimmt, so könnte dies ein Anzeichen dafür sein, dass die Rezession sich in der Nähe ihres Höhepunktes befinden könnte.

Als Beispiel dafür könnte die Rezession in den Jahren 2008/09 dienen. Ab Herbst 2008 gab es vermehrt Berichte in den Medien über Probleme bei Banken, Banken- und Firmenzusammenbrüche, einen starken Anstieg der Arbeitslosigkeit, Massenentlassungen, fallende kurz- und langfristige Zinsen, fallende Rohstoffpreise. Viele Aktienindices fielen seit Herbst 2008 und erreichten im März 2009 ihren Tiefpunkt. Allerdings war zu diesem Zeitpunkt die Anzahl der neuen Jahrestiefstkurse einer ausgewählten Anzahl von Aktien wesentlich niedriger als im Herbst 2008. Das könnte als ein Anzeichen dafür gewertet werden, dass die Rezession sich bereits im März 2009 in der Nähe ihres Höhepunktes befunden haben könnte. Natürlich gibt es auch dafür keine Gewissheit, denn die tatsächliche Wirtschaftsentwicklung wird nicht nur von den positiven Auswirkungen, die eine Rezession hervorbringt, sondern auch noch von unbekannt vielen anderen Faktoren bestimmt.

### Schlussfolgerung:

Unter der Annahme, dass es die negativen Auswirkungen eines auf einer Kreditblase beruhenden Wirtschaftsbooms sind, die die künftige Wirtschaftsentwicklung entscheidend beeinflussen werden, könnte die bevorzugte Ausführungsform der Erfindung möglicherweise einen Betrag zur Frage leisten, ob ein derartiger Wirtschaftsboom sich in der Nähe seines Höhepunktes befinden könnte.

Es ist jedoch unschwer zu erkennen, dass die bevorzugte Ausführungsform der Erfindung auf Annahmen (und daraus abgeleiteten Schlussfolgerungen) - und nicht auf Gewissheiten beruht. Es wird kein Anspruch erhoben, dass die Aussage der bevorzugten Ausführungsform der Erfindung zutreffend ist.

## Patentansprüche

1. Verfahren zur computergestützten Auswertung von Mustern in unterschiedlichen Zeitreihen, wobei bei einer vorherbestimmten Korrelationen von zeitlichem Auftreten und Zeitdauer des Auftreten von Mustern in unterschiedlichen Zeitreihen ein Signal emittiert wird.

2. Verfahren nach Anspruch 1, **dadurch gekennzeichnet, dass** das emittierte Signal eine Information enthält, dass ein auf einer Kreditblase beruhender Wirtschaftsboom sich in der Nähe seines Höhepunktes befinden könnte, und zwar dann, wenn über einen Zeitraum von ca. sechs Monaten bis ca. einem Jahr in den Medien konzentriert Berichte aufgetreten, die auf einen auf einer Kreditblase beruhenden Wirtschaftsboom hindeuten könnten, und wenn in diesem Zeitraum trotz steigender Aktienindices die Anzahl der Aktien, die einen neuen Jahreshöchstkurs erreichen, abnimmt bzw. die Anzahl der Aktien, die einen neuen Jahrestiefstkurs erreichen, zunimmt.

3. System zur Durchführung des Verfahrens nach einem der Ansprüche 1 oder 2.

4. Computerprogramm zur Durchführung des Verfahrens nach einem der Ansprüche 1 oder 2.
